# EUROPÄISCHE PATENTSCHRIFT

(11) **EP 2 933 087 B1**
(45) Veröffentlichungstag und Bekanntmachung des Hinweises auf die Patenterteilung: **04.04.2018**
(21) Anmeldenummer: 15000345.7
(22) Anmeldetag: 06.02.2015
(51) Int. Cl.: B29C 49/18, B29C 49/42, B29C 49/78, B29C 49/56, B29L 31/00

(54) **BLASSTATION MIT DRUCKLUFTBETRIEBENER FORMZUHALTUNG SOWIE VERFAHREN ZUM ZUSAMMENHALTEN EINER MEHRTEILIG AUSGEBILDETEN BLASFORM**
BLOWING STATION WITH COMPRESSED-AIR FORM RETAINER AND METHOD FOR HOLDING TOGETHER A BLOW MOULDING IN SEVERAL PARTS
STATION DE SOUFFLAGE AVEC DISPOSITIF DE VERROUILLAGE DE MOULE FONCTIONNANT À AIR COMPRIMÉ ET PROCÉDÉ DE SERRAGE D'UN MOULE DE SOUFFLAGE CONÇU EN PLUSIEURS PARTIES

(30) Priorität: 16.04.2014 DE 102014005533
(43) Veröffentlichungstag der Anmeldung: 21.10.2015
(73) Patentinhaber: KHS Corpoplast GmbH, 22145 Hamburg (DE)
(72) Erfinder: Linke, Michael, 22159 Hamburg (DE); Litzenberg, Michael, 21502 Geesthacht (DE); Baumgarte, Rolf, 22926 Ahrensburg (DE); Lewin, Frank, 22889 Tangstedt (DE)
(74) Vertreter: Hausfeld, Norbert

(56) Entgegenhaltungen:
- EP-A2- 2 444 235
- DE-A1-102011 110 962

## Beschreibung

Die Erfindung betrifft ein Verfahren zum Zusammenhalten einer mehrteilig ausgebildeten Blasform einer Blasstation gemäß dem Oberbegriff des Anspruchs 1. Weiterhin betrifft die Erfindung eine Blasstation für eine Blasmaschine nach dem Oberbegriff des Anspruchs 7, sowie eine Blasmaschine nach dem Oberbegriff des Anspruchs 10.

Im Stand der Technik sind seit längerem Blasmaschinen zur Blasformung von Behältern aus einem thermoplastischen Material bekannt. Die Behälter werden unter Einwirkung von Blasdruckluft in sogenannten Blasformen geformt. Der Hohlraum innerhalb einer Blasform bildet die Negativform für den herzustellenden Behälter. Bei Blasmaschinen, die nach dem Prinzip von Rundläufermaschinen arbeiten, sind die Blasformen an im Bereich von Blasrädern angeordneten Blasstationen angeordnet. Um einen Behälter innerhalb einer Blasform zu blasen, wird die Blasform zunächst geöffnet und ein sogenannter Vorformling in die Blasform eingeführt. Üblicherweise bestehen Blasformen aus mehreren, insbesondere aus drei Segmenten, nämlich typischerweise aus einer Bodenform und aus zwei Seitenhälften mit halbzylindrischer Grundkontur. Diese Blasformsegmente sind in der Regel lösbar an stabilen Blasformträgem befestigt. Die Lösbarkeit ermöglicht ein Austauschen der Formen, wenn von einem Flaschentyp auf einen anderen herzustellenden Flaschentyp gewechselt werden soll.

Zum Öffnen und Schließen der Blasform werden die Blasformsegmente bewegt. Typisch ist ein buchartige Aufklappbarkeit der Seitenteile und ein Heben und Absenken der Bodenform. Es sind auch andere Bewegungen denkbar. Der grundsätzliche Aufbau einer Blasstation mit Blasformträgern und einer mehrteiligen Blasform ist z.B. in der EP 1 919 690 B1 beschrieben.

Aufgrund der während eines Blasformprozesses innerhalb der Blasform herrschenden hohen Drücke, sind Verschlussmechanismen zum Schließen und Zuhalten der Blasform notwendig, die einen festen und gegen unbeabsichtigtes Öffnen der Blasform gesicherten Verschluss gewährleisten. Solche Verschlussmechanismen sind z.B. unter dem Begriff Formzuhaltung bekannt.

Es ist bekannt, eine Formzuhaltung zum Zuhalten der Blasform parallel zum Vorblasen und Fertigblasen eines Behälters mit einem für das Blasen der Behälter vorgesehenen Blasdruck zu beaufschlagen. Strömt also Druckluft in den Vorformling, so strömt auch Druckluft in die Formzuhaltung. Weiter ist bekannt, dass die Formzuhaltung unabhängig von der Druckbeaufschlagung des in der Blasform gehaltenen Vorformlinges mit Vorblas- oder Fertigblasluft mit Druckluft beaufschlagt wird. Dazu ist z.B. ein eigenes, z.B. elektromagnetisch angesteuertes Ventil vorgesehen. Über die Ansteuerung dieses elektrisch betriebenen Ventils kann die Dauer der Beaufschlagung der Formzuhaltung mit Blasdruck frei gewählt werden kann. Dies kommt vorzugsweise bei Blasverfahren zum Einsatz, bei denen die Dauer und die Kraft der Zuhaltung unabhängig vom Blasdruck gesteuert werden muss. Die gattungsgemäße EP 2 444 235 A2 zeigt z.B. das Beaufschlagen der Formzuhaltung mit Blasluft.

Wenn die Formzuhaltung parallel zum Vorblasen und Fertigblasen mit Blasdruck beaufschlagt wird, ist nachteilig, dass die über die Blasluft in der Formzuhaltung erzeugte Kraftentfaltung einer sich in der Blasform schnell entwickelnden Behälterblase nacheilt. Hierbei kann sich das Behältermaterial in noch nicht ganz geschlossene Formspalte zwischen den Segmenten der Blasform drücken und es entsteht eine sogenannte Partingline, was einem Materialüberschuss an der Außenwandung der geblasenen Behälter im Bereich der Formspalte entspricht. Behälter mit einer Partingline werden üblicherweise als Ausschuss behandelt oder als fehlerhaft beanstandet.

Bei herkömmlich betriebenen Formzuhaltungen hat sich als nachteilig gezeigt, dass es bei einem ungünstigen Verhältnis des Aufnahmevolumens der Formzuhaltung in Relation zum Volumen des zu fertigenden Behälters häufig zur Entstehung von Partinglinien kommt. Das Einleiten von Blasluft in den Vorformling bei gleichzeitigem Einleiten der Blasluft in die Formzuhaltung führt zuweilen dazu, dass sich der Vorfomling schnell ausdehnt und sich bereits an die Wände der Blasform anlegt, bevor die Formzuhaltung die Formspalte zwischen den Segmenten der Blasform schließt. Dazu kommt es beispielsweise weil der Zuleitungsquerschnitt für die Einleitung der Blasluft in den Vorformling konstruktiv bedingt deutlich größer ist, als der Zuleitungsquerschnitt der Formzuhaltung. Die unterschiedlichen Zuleitungsquerschnitte führen bei gleichem Eingangsdruck zu unterschiedlichen Volumenströmen und damit zu unterschiedlich schneller Füllung des Vorformlings bzw. der Formzuhaltung. Insbesondere macht sich dies bemerkbar bei der Blasformung von kleinen Behältern, bei denen das Aufnahmevolumen klein ist gegenüber dem Volumen der Formzuhaltung.
Aus DE 10 2011 110 962 A1 ist eine gattungsgemäße Blasstation mit einer pneumatischen Formzuhaltung bekannt, bei der ein Versorgungsdruck für die Formzuhaltung von einer pneumatischen Versorgungsleitung der Blasstation abgezweigt wird. Die Formzuhaltung wird für die Zwecke und für die Dauer der Erzeugung der Zusammenhaltekraft mit Druckluft beaufschlagt. DE 10 2011 110 962 offenbart ein Verfahren gemäß dem Oberbegriff des Anspruchs 1 und ein Blasstation gemäß dem Oberbegriff des Anspruchs 7. Der Erfindung liegt die Aufgabe zugrunde, ein Verfahren und eine Vorrichtung anzugeben, mit der das Zusammenhalten einer geschlossenen Blasform in einfacher und robuster Form ermöglicht ist. Es soll eine zuverlässige Formzuhaltung gewährleistet sein und dem Entstehen von Partinglinien entgegenwirkt werden.
Die Aufgabe wird gelöst, durch ein Verfahren nach Anspruch 1, durch eine Blasstation nach Anspruch 7 und durch eine Blasmaschine nach Anspruch 10. Vorteilhafte Weiterbildungen der Erfindungen sind in den abhängigen Ansprüchen angegeben.
Das erfindungsgemäße Verfahren zeichnet sich dadurch aus, dass die Formzuhaltung zumindest zeitweise mit Druckluft aus einer Steuerdruckluftleitung beaufschlagt wird. Bisher war es üblich, die für die Formzuhaltung benötigte Druckluft aus der Blasdruckluftversorgung zu entnehmen und entweder zeitgleich mit der Beaufschlagung des Vorformlings oder unter Verwendung eines separaten Steuerventils in die Formzuhaltung einzuleiten. Vor dem Einleiten von Blasdruckluft in den Vorformling kann aber bereits Steuerdruckluft in die Formzuleitung geführt werden, ohne dass zwingend ein separates Schaltventil zu verwenden wäre, weil vor dem Beginn der Blasdruckeinleitung in der Regel zunächst ein Entlüftungsventil von der Steuerdruckluft zu schließen ist und dabei auch in die Formzuhaltung geführt werden kann. Erfindungsgemäß ist also ermöglicht, auf einfache Weise die Formzuhaltung frühzeitig mit Druckluft zu beaufschlagen.
Erfindungsgemäß ist ein Verfahren zum Zusammenhalten einer mehrteilig ausgebildeten Blasform einer Blasstation in deren geschlossenem Zustand unter Verwendung einer druckluftbetriebenen, eine Zusammenhaltekraft ausübenden Formzuhaltung, wobei die Formzuhaltung zum Zwecke und für die Dauer der Erzeugung der Zusammenhaltekraft mit Druckluft beaufschlagt wird, wobei die Blasstation über ein mittels Steuerdruckluft aus einer Steuerdruckluftleitung steuerbares Entlastungsventil verfügt, wobei die Formzuhaltung zumindest zeitweise mit Steuerdruckluft aus der Steuerdruckluftleitung beaufschlagt wird.

Das Entlastungsventil kann für die Druckentlastung der Formzuhaltung, einer die Blasstation versorgenden Druckluftleitung und/oder der Blasform bzw. des in der Blasform hergestellten Behälters dienen. Die Blasstation versorgende Druckluftleitungen können z.B. eine Steuerdruckluftleitung oder eine Blasluftdruckleitung sein.

Mit Vorteil wird die Formzuhaltung dabei zumindest zeitweise mit Blasdruckluft aus der Blasdruckluftleitung beaufschlagt. Dies kann vorteilhaft oder gar erforderlich sein, wenn der Druck der Blasdruckluft höher als der Steuerdruck ist und z.B. in der Fertigblasphase die Blasform aufzudrücken versucht. Es ist dann möglich, zusätzlich oder alternativ Blasdruckluft in die Formzuhaltung zu leiten.

Bevorzugt erfolgt die Beaufschlagung erst mit der Steuerdruckluft und danach mit der Blasdruckluft. Die Steuerdruckluft soll dabei der zu Beginn vorhandenen Gefahr des Aufdrückens der Blasform durch die anfänglich einströmende Vorblasluft entgegenwirken, während die in die Formzuhaltung eingeleitete Blasdruckluft der späteren Gefahr entgegenwirkt, dass der Druck innerhalb der Blasform die von der Formzuhaltung aufgebrachte Zuhaltekraft übersteigt.

Mit Vorteil erfolgt die Beaufschlagung der Formzuhaltung mit der Steuerluft spätestens zu dem Zeitpunkt, bevorzugt sogar mit einem zeitlichen Abstand vorher, zu dem die Blasdruckluft in einen in der Blasform aufgenommenen Vorformling einströmt. Das zum Stand der Technik geschilderte nacheilende Verhalten der Zuhaltung kann dadurch zuverlässig vermieden werden. Bevorzugt erfolgt dabei die Beaufschlagung mit Steuerdruckluft und mit Blasdruckluft nicht gleichzeitg, sondern zeitlich nacheinander, z.B. zunächst mit Steuerdruckluft, danach mit Blasdruckluft.

Die Umschaltung zwischen der Beaufschlagung mit der Steuerluft und der Beaufschlagung mit der Blasdruckluft ist auf verschiedene Arten ausführbar, z.B. unter Verwendung von wenigstens zwei Steuerventilen, die die jeweiligen Zuleitungen der Steuerdruckluft und der Blasdruckluft in die Formzuhaltung beherrschen. Bevorzugt erfolgt dies aber über ein Wechselventil, was den Schaltungsaufwand minimiert und eine einfache Nachrüstbarkeit bestehender Anlagen in konstruktiv einfacher Weise ermöglicht.

Dabei ist z.B. mit Vorteile das Wechselventil auf einer ersten Eingangsseite mit einer Steuerdruckluftleitung, auf einer zweiten Eingangsseite mit der Blasdruckluftleitung und ausgangsseitig mit der Formzuhaltung kommunizierend verbunden. Auf diese Weise erfolgt ein Umschalten automatisch zu dem Zeitpunkt, zu dem die Blasdruckluft den Druck der Steuerdruckluft übersteigt.

Die Erfindung betrifft weiterhin eine Blasstation für eine Blasmaschine zur Blasformung von Behältern aus Vorformlingen aus einem thermoplastischen Material, mit einer mehrteilig ausgebildeten Blasform und mit einer druckluftbetriebenen Formzuhaltung zum Zusammenhalten der Blasform in deren geschlossenen Zustand, wobei die Formzuhaltung zur Ausführung eines Verfahrens nach einem der vorhergehenden Ansprüche ausgebildet ist. Es sind also die erforderlichen Stellglieder und Leitungen vorgesehen, das erfindungsgemäße Verfahren auszuführen. Die Vorteile ergeben sich aus den verfahrensgemäßen und oben beschriebenen Vorteilen.

Das erfindungsgemäße Verfahren und die erfindungsgemäße Vorrichtung sind derart ausgestaltet, dass sie nach dem Schließen einer insbesondere mehrteiligen Blasform die Segmente der Blasform unter Ausübung einer Zuhaltekraft in einer Geschlossenstellung halten. Durch die Zuhaltekraft werden Spaltbildungen zwischen gegeneinander beweglichen Teilen der Blasform verhindert bzw. vermieden. Beim Zuhalten der Blasform wird auch vermieden, dass hohe Druckkräfte, die beim Blasen eines Behälters aus einem Vorformling im Inneren der Blasform entstehen, die Blasformsegmente auseinanderdrücken. Das Zuhalten einer Blasform umfasst also insbesondere die Ausübung einer Zuhaltekraft auf eine geschlossene Blasform. Die Zuhaltekraft wird durch die Formzuhaltung und insbesondere durch die Druckluftzuführung in die Formzuhaltung erzeugt.

Erfindungsgemäß ist auch eine Blasstation für eine Blasmaschine zur Blasformung von Behältern aus Vorformlingen aus einem thermoplastischen Material, mit einer mehrteilig ausgebildeten Blasform und mit einer druckluftbetriebenen Formzuhaltung zum Zusammenhalten der Blasform in deren geschlossenen Zustand, wobei die Blasstation über ein mittels Steuerdruckluft aus einer Steuerdruckluftleitung steuerbares Entlastungsventil verfügt, wobei die Formzuhaltung mit der Steuerdruckluftleitung kommunizierend verbunden oder verbindbar ist.

Erfindungsgemäß ist die Formzuhaltung mit Blasdruckluft und einer von der Blasdruckluft unabhängig bereitgestellten Halteluft betätigbar. Erläutert ist dies anhand der Steuerdruckluft. Sollten alternative Druckgasquellen zur Verfügung stehen, ließen sich auch diese alternativen Druckgasquellen nutzen.

Erfindungsgemäß ist ebenfalls eine Blasmaschine zur Blasformung von Behältern aus Vorformlingen aus einem thermoplastischen Material mit einer erfindungsgemäßen Blasstation der vorgenannten Art. Die Vorzüge der Blasmaschine ergeben sich aus den verfahrensgemäßen und zur Blasform genannten Vorteilen.

Die Erfindung hat den weiteren Vorteil, dass mindestens zwei voneinander unabhängige Fluide für die Betätigung der Formzuhaltung nutzbar sind. Durch die Verwendung eines von der Blasluft unabhängigen Fluids kann eine frühzeitige Kraftentfaltung der Formzuhaltung in einfacher Weise ausgelöst werden, insbesondere, wenn noch keine Blasluft zum Formen eines Behälters in die Blasform bzw. in den darin gehaltenen Vorformling geleitet wird. Für die einstellbare Zuleitung von Fluiden an die Formzuleitung, zum Zwecke ihrer Betätigung, kann ein Stellglied der nachfolgend beschriebenen Art verwendet werden. Ein derartiges Stellglied hat in einer bevorzugten Ausbildung mindestens zwei Eingänge und einen Ausgang. Die Eingänge sind vorzugsweise einerseits mit Blasluft und andererseits mit Halteluft beaufschlagbar. Diese Halteluft kann wie vorab geschildert z.B. Steuerdruckluft sein. Für die Zuleitung eines Fluids an die Formzuhaltung, ist der Ausgang des Stellglieds mit der Formzuhaltung verbunden.

Denkbar ist, dass die Formzuhaltung neben einer Blasluft und einer Halteluft, z.B. der Steuerdruckluft, mit weiteren Fluiden betätigbar ist. Dafür kann das Stellglied mehr als zwei Eingänge aufweisen, so dass neben einer Blasluft und/oder einer Halteluft auch ein weiteres Fluid an die Formzuhaltung geleitet werden kann, mit der die Formzuhaltung betätigbar ist.

Das Stellglied ist bevorzugt so ausgebildet, das es zur Durchleitung eines Fluids jeweils einen der Eingänge mit dem Ausgang verbindet. Bei dieser Ausführung sind die Eingänge mit dem Ausgang diskret verschaltet. Alternativ oder zusätzlich kann das Stellglied ausgebildet sein, die Ausgänge in kontinuierlicher Weise mit dem Ausgang zu verschalten. Diese kontinuierliche Arbeitsweise führt zu dem Vorteil, dass ein Fluidgemisch mit einem einstellbaren Verhältnis aus den an den Eingängen des Stellglieds anliegenden Fluiden an den Ausgang des Stellglieds und damit an die Formzuhaltung geleitet werden kann. Sowohl bei der diskreten als auch bei der kontinuierlichen Verschaltung sind erste Eingänge bzw. ein erster Eingang mit dem Ausgang verbindbar und die restlichen Eingänge fluiddicht, insbesondere gasdicht absperrbar. Die Absperrung von Eingängen verhindert ein ungewolltes Abfließen eines Fluids über einen Eingang. In einer einfachen Ausführung können zum Absperren der Eingänge Rückschlagventile in dem Stellglied vorgesehen sein.

Bevorzugt ist das Stellglied so ausgebildet, dass es nur eines der an seinen Eingängen anliegenden Fluide, insbesondere entweder Blasluft oder Steuerdruckluft, an die Formzuhaltung leitet. Weiter bevorzugt ist das Stellglied so ausgebildet, dass es von den an seinen Eingängen anliegenden Fluiden das Fluid mit dem höchsten Druckniveau an die Formzuhaltung leitet. Alternativ oder zusätzlich kann das Stellglied ausgebildet sein, Blasluft und Halteluft gleichzeitig, insbesondere bei gleichem oder nur geringfügig unterschiedlichem Druckniveau, an die Formzuhaltung zu leiten.

Vorzugsweise wird die Halteluft aus einer Fluidquelle im pneumatischen System einer Blasmaschine, insbesondere in der Nähe der Blasstation, entnommen.

In einer bevorzugten Ausgestaltung ist die Halteluft eine zur Ansteuerung von im Bereich der Blasstation angeordneten Ventilen vorgesehene Steuerluft. Diese Steuerluft kann z.B. ein für die Schaltung eines im Bereich einer Blasstation angeordneten Entlüftungsventils vorgesehenes Fluid sein. Genauer gesagt, kann also eine Druckluft für die Formzuhaltung verwendet werden, die in einer frühen Phase des Blasvorgangs bzw. noch vor dem Blasvorgang in der Nähe einer Blasstation abgreifbar ist und zwar insbesondere bevor der zur Einleitung von Blasluft in die Blasform vorgesehene Blaskanal mit Blasluft beaufschlagt wird.

Ein vorteilhafter Zeitpunkt für die Betätigung der Formzuhaltung liegt z.B. dann vor, wenn ein Pilotventil geschaltet wird, um eine zum Schalten eines Entlüftungsventils vorgesehene Steuerluft in eine Fluidleitung im Bereich einer Blasstation einzuleiten.

In einer besonders bevorzugten Ausgestaltung ist das Stellglied ein Wechselventil. Ein Wechselventil ist aus dem Stand der Technik bekannt als ein pneumatisches oder hydraulisches Ventil mit mindestens zwei Eingängen und einem Ausgang. Wenn mindestens einer der Eingänge mit einem Fluid beaufschlagt ist, wird dieses Fluid an den Ausgang des Wechselventils und damit an die Formzuhaltung geleitet. Insbesondere kann vorgesehen sein, dass in Abhängigkeit von dem jeweiligen Druckniveau der an den Eingängen des Stellglieds anliegenden Fluide, das Fluid mit dem höheren Druckniveau an den Ausgang des Stellglieds und damit an die Formzuhaltung geleitet wird.

In einer weiter bevorzugten Ausgestaltung weist das Stellglied einen nicht-elektrischen Antrieb auf. Dies hat den Vorteil, dass eine Blasstation in einfacher Weise mit der erfindungsgemäßen Formzuhaltung ausgestattet werden kann. Bei Verzicht auf ein elektrisch angesteuertes Stellglied kann insbesondere auf die Anpassung bzw. Einstellung der elektrischen Steuerung der Blasmaschine bzw. der Blasstation verzichtet werden. Ein Stellglied mit einem mechanischen Antrieb ist robust, preiswert und wartungsarm.

Die vorbeschriebene erfindungsgemäße Blasstation und/oder die erfindungsgemäße Blasmaschine sind insbesondere ausgebildet zur Ausführung des eingangs beschriebenen erfindungsgemäßen Verfahrens.

In den Zeichnungen sind bevorzugte Ausführungsbeispiele der Erfindung schematisch dargestellt. Es zeigen:
- Fig. 1: ein Blockschaltbild einer Druckgasversorgung im Bereich einer Blasstation und eine erfindungsgemäße Vorrichtung zum Verschließen einer Blasform, und
- Fig. 2: eine schematische Darstellung einer erfindungsgemäßen Formzuhaltung.

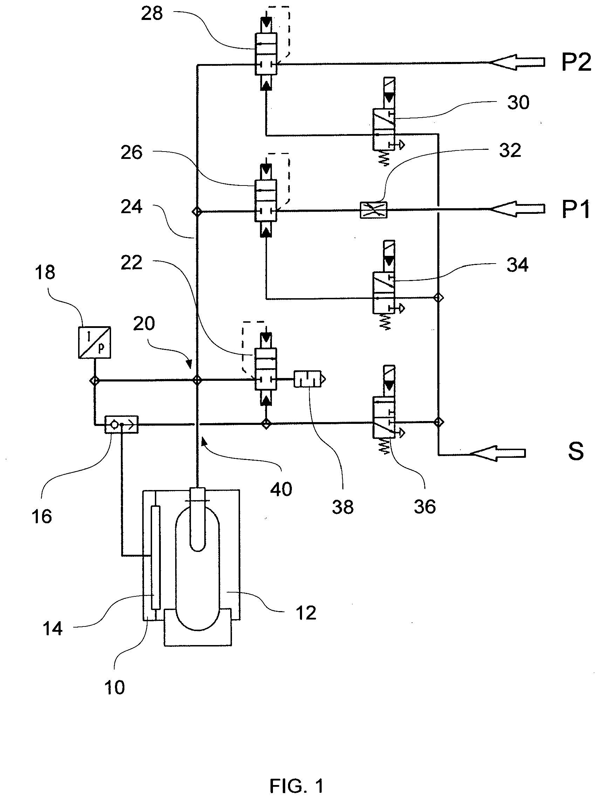

Fig. 1 zeigt schematisch ein Blockschaltbild einer Druckgasversorgung im Bereich einer Blasstation und eine erfindungsgemäße Vorrichtung 10 zum Verschließen einer Blasform 12. Die erfindungsgemäße Vorrichtung 10 ist mit einer Formzuhaltung 14 ausgestattet, die über eine Fluidleitung mit einem Stellglied 16 verbunden ist.

Das Stellglied 16 weist vorzugsweise drei Anschlüsse auf. Über einen ersten Anschluss ist das Stellglied 16 wie beschrieben an die Formzuhaltung 14 angeschlossen. Über einen zweiten Anschluss kann das Stellglied 16 an eine Blasluftleitung 24 angeschlossen sein. Die Blasluftleitung 24 führt die zum Blasen eines Behälters aus einem Vorformling vorgesehene Blasdruckluft P1, P2. Die Formzuhaltung 14 kann somit über das Stellglied 16 mit Blasdruckluft P1, P2 beaufschlagt werden. In einem Endbereich ist die Blasluftleitung 24 mit einer Blasform 12 verbindbar. Über diese Verbindung kann die Blasdruckluft P1, P2 zum Blasen eines Behälters in die Blasform 12 geleitet werden. Über einen dritten Anschluss kann das Stellglied 16 an ein Ventil 36 angeschlossen sein, über das es mit einer von der Blasdruckluft P1, P2 unabhängigen Steuerluft S beaufschlagbar ist. Denkbar ist, dass alternativ oder zusätzlich eine von der Steuerluft S und von der Blasdruckluft P1, P2 unabhängige Halteluft an das Stellglied zugeleitet wird, die zur Weiterleitung an die Formzuhaltung und zu deren Betätigung vorgesehen ist (nicht dargestellt).

An einer Fluidleitung zwischen dem Stellglied 16 und der Blasluftleitung 24 kann ein Druckmessumformer 18 zur Messung des Druckniveaus der Blasdruckluft P1, P2 angeschlossen sein.

Über das in Fig. 1 dargestellte Ventil 28 kann Blasdruckluft P2 in die Blasluftleitung 24 eingeleitet werden. Das Ventil 28 ist beispielsweise über das Schaltventil 30 zwischen einer Offen- und einer Geschlossenstellung schaltbar. Dazu wird zunächst das Schaltventil 30 geöffnet. Das durch das Ventil 30 geleitete Fluid wird an das Ventil 28 geleitet und schaltet dieses in die Offenstellung. Nach dem vorgenannten Prinzip kann auch das Ventil 26 über ein Schaltventil 34 geschaltet sein. Über das Ventil 26 kann Blasluft P1 in die Blasluftleitung 24 geleitet werden. Vorzugsweise ist stromaufwärts von dem Ventil 26 eine Drosseleinrichtung 32 zur Regulierung des Gasflusses vorgesehen.

In Fig. 1 ist bei Bezugszeichen 20 zu erkennen, dass die Blasluftleitung 24 an ein Entlüftungsventil 22 angeschlossen sein kann. Über das Entlüftungsventil 22 kann die Blasdruckluft P1, P2 vorzugsweise über einen Schalldämpfer 38 an die Umgebung abgegeben werden. Die Blasluftleitung 24 kann so entlüftet werden. Ein Entlüftungsventil wird auch Entlastungsventil genannt.

Üblicherweise beginnt der Blaszyklus mit dem Schließen des Entlüftungsventils 22. Dies kann durch das Öffnen des Ventils 36 erzielt werden. Beim Öffnen des Ventils 36 wird das Ventil 22 mit Steuerdruckluft beaufschlagt, wodurch das Entlüftungsventil 22 in seine Geschlossenstellung betätigt wird. Vorzugsweise strömt in einem nächsten Schritt die insbesondere zum Schalten des Entlüftungsventils 22 verwendbare Steuerluft S über das Stellglied 16 zur Formzuhaltung 14 der Vorrichtung 10. Mit dieser Druckbeaufschlagung kann die Blasform 12 frühzeitig, also z.B. vor oder bei Beginn eines Druckaufbaus in der Blasluftleitung 24, kraftbeaufschlagt werden. Nach dem Beginn des Blasformprozesses, also nach dem Zuschalten von Blasdruckluft P1, P2 in die Blasluftleitung 24, schaltet das Stellglied 16 bevorzugt um von Steuerluft S bzw. Halteluft auf Blasdruckluft P1, P2. Insbesondere schaltet das Stellglied 16 dann um, wenn das Druckniveau der Blasdruckluft P1, P2 am Stellglied 16 höher ist, als das Druckniveau der am Stellglied 16 anliegenden Steuerluft S bzw. Halteluft.

Das Druckniveau der Steuerluft S bzw. Halteluft kann zu Beginn der Entwicklung der Behälterblase in der Blasform 12 - z.B. bei Beaufschlagung der Blasform 12 mit der Blasdruckluft P1 - höher sein, als das Druckniveau der Blasdruckluft P1 in der Blasluftleitung 24. Es ist also daran gedacht, dass die Umschaltung des Stellgliedes 16 von Steuerluft S bzw. Halteluft zu Blasdruckluft P1, P2 erst bzw. frühestens mit der Zuschaltung der Blasdruckluft P2 in die Blasluftleitung 24 erfolgt.

Der Vollständigkeit halber sei erwähnt, dass Verbindungsstellen zwischen Fluidleitungen zur Verteilung des in den Leitungen geführten Druckgases in Fig. 1 - wie z.B. bei Bezugszeichen 20 zu erkennen - als Raute dargestellt sind. Überschneidende Leitungen ohne Verbindung sind in Fig. 1 - wie z.B. bei Bezugszeichen 40 zu erkennen - mit einer Unterbrechung einer schneidenden Leitung darstellt.

Es versteht sich, dass die Versorgungsleitungen und Verbindungsstellen zwischen den Komponenten bevorzugt gasdicht ausgeführt sind. Erfindungsgemäß kann eine Vorrichtung 10 mit einer Formzuhaltung 14 und einem Stellglied 16 sein. Erfindungsgemäß kann auch ein System sein, dass aus einer Vorrichtung 10 mit einer Formzuhaltung 14 und einer Auswahl von Komponenten der Fig. 1 besteht.

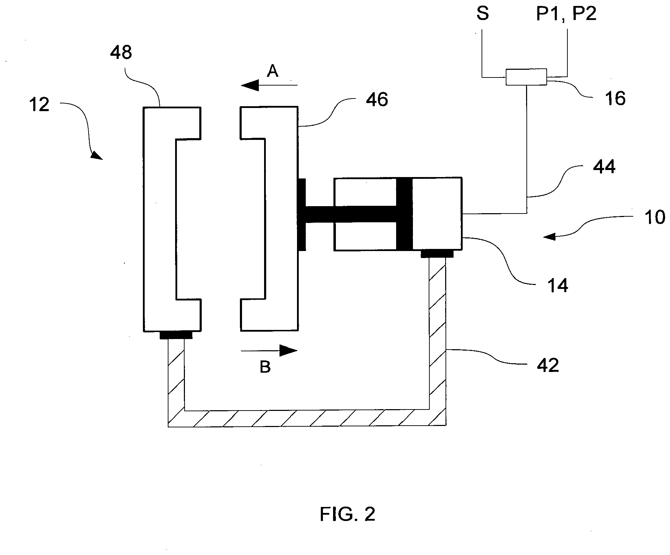

Fig. 2 zeigt eine schematische Darstellung einer erfindungsgemäßen Formzuhaltung 10 aus Fig. 1 in vereinfachter Form. Wie dargestellt, ist die als Arbeitszylinder ausgestaltete Formzuhaltung 14 der Vorrichtung 10 mittels einer Fluidleitung 44 an ein Stellglied 16 angeschlossen. Das Stellglied 16 weist vorzugsweise eine Zuführung für eine Halteluft S und eine Zuführung für eine Blasdruckluft P1, P2 auf. Wird die Formzuhaltung 14 über die Fluidleitung 44 mit einem Fluid beaufschlagt, kann vorgesehen sein, dass die Formzuhaltung 10 Segmente 46, 48 einer Blasform 12 gegeneinander verspannt bzw. die Segmente 46, 48 der Blasform gegeneinander presst. Ein Anpressen der Segmente 46, 48 gegeneinander sorgt für einen festen Verschluss der Blasform 12, sodass sich die Blasform 12 während des Blasformprozesses unter der Last von hohen Blasluftdrücken innerhalb der Blasform 12 nicht unbeabsichtigt öffnet und eine Spaltbildung zwischen Segmenten 46, 48 der Blasform 12 verhindert bzw. vermieden wird. Natürlich kann die Blasform 12 aus weiteren Segmenten, z.B. aus zwei Formhälften und einem Bodensegment bestehen (nicht dargestellt).

Die Pfeile A und B in Fig. 2 zeigen schematisch das Verschieben eines ersten Segmentes 46 einer Blasform 12 gegen ein zweites Segment 48. In Richtung des Pfeils A wird die Blasform 12 geschlossen. In Richtung des Pfeils B wird die Blasform geöffnet. Der Steg 42 zeigt schematisch eine ortsfeste Anordnung des Segmentes 48 gegenüber einem Gehäuse der Formzuhaltung 14. Mit dem Steg 42 kann das Segment 48 also formschlüssig und/oder kraftschlüssig an ein Gehäuse der Vorrichtung 10 bzw. einer Formzuhaltung 14 gekoppelt sein. Wie besonders vereinfacht in Fig. 2 angedeutet, kann die Vorrichtung 10 in einer einfachen Variante eine als Arbeitszylinder ausgestaltete Formzuhaltung 14 mit einem Druckzylinder und einem Kolben zur Verschiebung eines Segmentes 46 der Blasform 12 aufweisen. Andere Ausführungen, die unter den Wortlaut der Schutzgegenstände fallen sind denkbar.

## Patentansprüche

1. Verfahren zum Zusammenhalten einer mehrteilig ausgebildeten Blasform einer Blasstation zur Blasformung von Behältem aus Vorformlingen aus einem thermoplastischen Material in deren geschlossenem Zustand unter Verwendung einer druckluftbetriebenen, eine Zusammenhaltekraft ausübenden Formzuhaltung (14), wobei die Formzuhaltung (14) zum Zwecke und für die Dauer der Erzeugung der Zusammenhaltekraft mit Druckluft beaufschlagt wird,
**dadurch gekennzeichnet, dass** die Blasstation über ein mittels Steuerdruckluft aus einer Steuerdruckluftleitung steuerbares Entlastungsventil verfügt, wobei die Formzuhaltung zumindest zeitweise mit Steuerdruckluft aus der Steuerdruckluftleitung beaufschlagt wird.

2. Verfahren nach Anspruch 1, **dadurch gekennzeichnet, dass** die Formzuhaltung zumindest zeitweise mit Blasdruckluft aus einer Blasdruckluftleitung beaufschlagt wird.

3. Verfahren nach Anspruch 2, **dadurch gekennzeichnet, dass** die Beaufschlagung erst mit der Steuerdruckluft und danach mit der Blasdruckluft erfolgt.

4. Verfahren nach Anspruch 3, **dadurch gekennzeichnet, dass** die Beaufschlagung der Formzuhaltung (14) mit der Steuerdruckluft spätestens zu dem Zeitpunkt erfolgt, zu dem Blasdruckluft in einen in der Blasform aufgenommenen Vorformling einströmt.

5. Verfahren nach Anspruch 3 oder 4, **dadurch gekennzeichnet, dass** die Beaufschlagung mit Steuerdruckluft und mit Blasdruckluft zeitlich nacheinander erfolgt.

6. Verfahren nach Anspruch 5, **dadurch gekennzeichnet, dass** eine Umschaltung zwischen der Beaufschlagung mit der Steuerdruckluft und der Beaufschlagung mit der Blasdruckluft über ein Wechselventil (16) erfolgt.

7. Blasstation für eine Blasmaschine zur Blasformung von Behältern aus Vorformlingen aus einem thermoplastischen Material, mit einer mehrteilig ausgebildeten Blasform und mit einer druckluftbetriebenen Formzuhaltung (14) zum Zusammenhalten der Blasform in deren geschlossenen Zustand, **dadurch gekennzeichnet, dass** die Blasstation über ein mittels Steuerdruckluft aus einer Steuerdruckluftleitung steuerbares Entlastungsventil verfügt, wobei die Formzuhaltung mit der Steuerdruckluftleitung kommunizierend verbunden oder verbindbar ist.

8. Blasstation nach Anspruch 7, **dadurch gekennzeichnet, dass** die Blasstation eine Blasdruckluftleitung zum Bereitstellen von Blasdruckluft für die Blasformung von Vorformlingen zu Behältern umfasst, wobei die Formzuhaltung mit der Blasdruckluftleitung kommunizierend verbunden oder verbindbar ist.

9. Blasstation nach Anspruch 8, **dadurch gekennzeichnet, dass** die Blasstation ferner ein Wechselventil (16) umfasst, wobei das Wechselventil auf einer ersten Eingangsseite mit der Steuerluftdruckleitung, auf einer zweiten Eingangsseite mit der Blasdruckluftleitung und ausgangsseitig mit der Formzuhaltung (14) kommunizierend verbunden ist.

10. Blasmaschine zur Blasformung von Behältern aus Vorformlingen aus einem thermoplastischen Material mit einer Blasstation nach einem der Ansprüche 7 bis 9.

## Claims

1. A method for holding together a blow molding in several parts of a blowing station in the closed state for blow molding containers from preforms of a thermoplastic material using a compressed-air operated form retainer (14), which exerts a holding-together force, wherein the form retainer (14) is pressurized with compressed air for the purpose and for the duration of generating the holding-together force,
**characterized in that** the blowing station has a relief valve, which can be controlled by means of control compressed air from a control compressed air line, wherein the form retainer is pressurized at least at times with control compressed air from the control compressed air line.

2. Method according to claim 1, **characterized in that** the form retainer is pressurized at least at times with blowing compressed air from a blowing compressed air line.

3. Method according to claim 2, **characterized in that** the pressurizing is initially carried out with the control compressed air and then with the blowing compressed air.

4. Method according to claim 3, **characterized in that** the pressurizing of the form retainer (14) with the control compressed air is carried out at the latest at the point in time, at which blowing compressed air flows into a preform, which is accommodated in the blow molding.

5. Method according to claim 3 or 4, **characterized in that** the pressurizing with control compressed air and with blowing compressed air is carried out one after the other with respect to time.

6. Method according to claim 5, **characterized in that** a switching between the pressurizing with the control compressed air and the pressurizing with the blowing compressed air is carried out via a changeover valve (16).

7. A blowing station for a blowing machine for blow molding containers from preforms of a thermoplastic material, comprising a blow molding in several parts and a compressed-air operated form retainer (14) for holding together the blow molding in the closed state thereof,
**characterized in that** the blowing station has a relief valve, which can be controlled by means of control compressed air from a control compressed air line, wherein the form retainer is connected or can be connected to the control compressed air line to communicate therewith.

8. Blowing station according to claim 7, **characterized in that** the blowing station comprises a blowing compressed air line for providing blowing compressed air for blow molding preforms into containers, wherein the form retainer is connected or can be connected to the blowing compressed air line to communicate therewith.

9. Blowing station according to claim 8, **characterized in that** the blowing station further comprises a changeover valve (16), wherein the changeover valve is connected to the control compressed air line on a first inlet side, to the blowing compressed air line on a second inlet side, and to the form retainer (14) on the outlet side to communicate therewith.

10. A blowing machine for blow molding containers from preforms of a thermoplastic material, comprising a blowing station according to any one of claims 7 to 9.

## Revendications

1. Procédé de serrage d'un moule de soufflage en plusieurs parties d'une station de soufflage pour le moulage par soufflage de récipients à partir de préformes en un matériau thermoplastique, le moule étant maintenu à l'état fermé par un dispositif de verrouillage de moule (14), actionné par air comprimé et exerçant une force de serrage, le dispositif de verrouillage de moule (14) étant soumis à l'action de l'air comprimé dans le but de générer la force de serrage et pour la durée d'exercice de cette force,
**caractérisé en ce que** la station de soufflage dispose d'une soupape de décharge pouvant être commandée par de l'air comprimé de commande provenant d'une conduite d'air comprimé de commande, le verrouillage de moule étant, temporairement au moins, soumis à l'action d'air comprimé provenant de la conduite d'air comprimé de commande.

2. Procédé selon la revendication 1, **caractérisé en ce que** le dispositif de verrouillage de moule est, temporairement au moins, soumis à l'action d'air comprimé de soufflage provenant d'une conduite d'air comprimé de soufflage.

3. Procédé selon la revendication 2, **caractérisé en ce que** l'air comprimé mis en oeuvre est d'abord de l'air comprimé de commande puis de l'air comprimé de soufflage.

4. Procédé selon la revendication 3, **caractérisé en ce que** le dispositif de verrouillage de moule (14) est soumis à l'action de l'air comprimé de commande au plus tard au moment où l'air comprimé de soufflage est injecté dans une préforme logée dans le moule de soufflage.

5. Procédé selon la revendication 3 ou 4, **caractérisé en ce que** l'air comprimé de commande et l'air comprimé de soufflage agissent consécutivement dans le temps.

6. Procédé selon la revendication 5, **caractérisée en ce qu'**une commutation entre l'injection d'air comprimé de commande et d'air comprimé de soufflage a lieu au moyen d'une soupape à deux voies (16).

7. Station de soufflage pour une machine de moulage par soufflage de récipients à partir de préformes en un matériau thermoplastique, avec un moule de soufflage conçu en plusieurs parties et un dispositif de verrouillage de moule (14) actionné par air comprimé pour le maintien du moule de soufflage en son état fermé,
**caractérisé en ce que** la station de soufflage dispose d'une soupape de décharge pouvant être commandée par de l'air comprimé de commande provenant d'une conduite d'air comprimé de commande, le dispositif de verrouillage de moule étant ou pouvant être relié à la conduite d'air comprimé de commande de façon communicante.

8. Station de soufflage selon la revendication 7, **caractérisée en ce que** la station de soufflage comprend une conduite d'air comprimé de soufflage pour la mise à disposition d'air comprimé de soufflage pour le moulage par soufflage de récipients à partir de préformes, le dispositif de verrouillage de moule étant ou pouvant être relié à la conduite d'air comprimé de soufflage de façon communicante.

9. Station de soufflage selon la revendication 8, **caractérisée en ce que** la station de soufflage comporte par ailleurs une soupape à deux voies (16), cette soupape étant relié de façon communicante par une première entrée à la conduite d'air comprimé de commande, par une seconde entrée à la conduite d'air comprimé de soufflage et du côté sortie au dispositif de verrouillage de moule (14).

10. Machine de moulage par soufflage de récipients à partir de préformes en un matériau thermoplastique équipée d'une station de soufflage selon l'une des revendications 7 à 9.
